# EUROPÄISCHE PATENTSCHRIFT

(11) **EP 1 360 089 B1**
(45) Veröffentlichungstag und Bekanntmachung des Hinweises auf die Patenterteilung: **25.08.2004**
(21) Anmeldenummer: 02719811.8
(22) Anmeldetag: 13.02.2002
(51) Int. Cl.: B60R 13/02

(54) **INNENAUSBAUTEIL FÜR KRAFTFAHRZEUGE UND VERFAHREN ZUR HERSTELLUNG DES INNENAUSBAUTEILES**
INTERIOR FITTING FOR MOTOR VEHICLES AND METHOD FOR PRODUCING ONE SUCH INTERIOR FITTING
PIECE DE FINITION DE VEHICULES AUTOMOBILES ET SON PROCEDE DE PRODUCTION

(30) Priorität: 15.02.2001 DE 10107038
(43) Veröffentlichungstag der Anmeldung: 12.11.2003
(73) Patentinhaber: Erwin Behr Automotive GmbH, 73240 Wendlingen (DE)
(72) Erfinder: EHRATH, Martin, 73033 Göppingen (DE)
(74) Vertreter: Karrais, Martin
(86) Internationale Anmeldenummer: PCT/EP2002/001473
(87) Internationale Veröffentlichungsnummer: WO 2002/064402

(56) Entgegenhaltungen:
- DE-A- 19 636 120
- DE-A- 19 909 869
- US-A- 3 551 232
- US-A- 4 201 612
- US-A- 4 215 170
- US-A- 5 629 085
- US-B1- 6 180 195

## Beschreibung

Die Erfindung betrifft ein Innenausbauteil mit den Merkmalen des Oberbegriffes des Anspruches 1 sowie ein Verfahren zu dessen Herstellung.

Innenausbauteile mit einem beschichteten, zum Beispiel lackierten Basisteil werden häufig zur Innenausstattung von Kraftfahrzeugen eingesetzt. Hierbei kommen als Basisteile insbesondere Holzformteile zum Einsatz, die in massiver Form oder als Furnierteile ausgebildet sein können. Auf die Sichtseite des Basisteiles wird üblicherweise eine Beschichtung in Form einer durchsichtigen Lack- oder Harzschicht aufgebracht, so daß eine meist glänzende und strapazierfähige Oberfläche erzeugt wird. Das Basisteil wird dadurch sichtseitig versiegelt und seine Struktur wird zusätzlich hervorgehoben. Zu diesem Zweck wird das Basisteil üblicherweise mit einer ca. 0,5 bis etwa 0,8 mm dicken Lackschicht überzogen.

Die Herstellung der Beschichtung erfolgt in der Regel dergestalt, daß der Lack auf die zu beschichtende Oberfläche des Basisteiles aufgespritzt oder auflackiert wird. Hierbei sind mehrere Lagen erforderlich, um die gewünschte Versiegelung und eine glänzende, die Struktur des Basisteiles hervorhebende Oberfläche zu erhalten. Dies ist mit einem erheblichen Kosten- und Zeitaufwand verbunden.

In der DE-C-43 20 893 wird vorgeschlagen, das Basisteil in einen Hohlraum eines Formteiles einzulegen, wobei zwischen dem zu beschichtenden Oberflächenbereich des Basisteiles und der zugeordneten Wand des Hohlraumes ein Spaltraum ausgebildet wird, in den ein flüssiges Oberflächenbeschichtungsmaterial eingefüllt wird, das anschließend aushärtet.

Der Einsatz einer Beschichtung in Form einer Lackschicht, die entweder durch Aufspritzen oder durch einen Gießvorgang wie voranstehend erläutert erzeugt wird, verleiht dem Innenausbauteil zwar eine optisch ansprechende Wirkung und hat auch eine Versiegelung beispielsweise unter Einsatz von Holz gefertigter Basisteile zur Folge, es kann aber nicht in allen Fällen die gewünschte dauerhafte Oberflächenqualität des Innenausbauteiles sichergestellt werden.

Aus der gattungsbildenden DE-A-199 09 869 ist ein Innenausbauteil bekannt, bei dem ein Basisteil in Form eines Trägerelementes sichtseitig mit einem Kleber beschichtet wird, und auf die Kleberschicht wird dann eine Zierschicht, beispielsweise eine bruchgefährdete dünne Gesteinsschicht, aufgebracht. Die Zierschicht wird mit einem elastischen Element, beispielsweise einem Gummituch, belegt, das dann mit Druck beaufschlagt wird zum Verkleben der Zierschicht mit dem Trägerelement. Anschließend wird das elastische Element durch Einwirkung von Wärme und/oder Einwirkung eines Lösungsmittels von der Zierschicht wieder entfernt.

In der US-A-3 551 232 wird ein Innenausbauteil mit einem Substrat und einer Deckschicht beschrieben, bei dem das Substrat eine Vielzahl von Durchgangsöffnungen aufweist. Das Substrat wird sichtseitig mit einem Kleber beschichtet, auf dem dann die Deckschicht positioniert wird. Auf der der Deckschicht abgewandten Rückseite wird das Substrat anschließend mit einem Unterdruck beaufschlagt und die Deckschicht wird erwärmt, so daß sie über die Durchgangsöffnungen des Substrates hindurch angesaugt wird, sich in ihrer Form dem Verlauf des Substrates anpaßt und mit dem Substrat verklebt. Ein Innenausbauteil, das unter Anwendung eines ähnlichen Vakuumformprozesses hergestellt ist, wird in der US-A-S 629 085 offenbart.

Aufgabe der vorliegenden Erfindung ist es, ein Innenausbauteil der gattungsgemäßen Art derart weiterzubilden, daß es eine verbesserte Oberflächengüte aufweist.

Diese Aufgabe wird bei einem Innenausbauteil der eingangs genannten Art erfindungsgemäß dadurch gelöst, daß die Verbindungsschicht ein Verbindungsmaterial umfaßt, welches unter Druckbeaufschlagung zwischen das Basisteil und das Deckschichtelement eingebracht ist.

Die Ausbildung der Beschichtung mit einem Deckschichtelement und einer Verbindungsschicht hat den Vorteil, daß die einzelnen Schichtelemente jeweils für unterschiedliche funktionelle Anforderungen der Beschichtung optimiert werden können, so daß beispielsweise eine Versiegelung des Basisteiles und außerdem sowohl eine ansprechende ästhetische Wirkung als auch eine dauerhafte Oberflächengüte gewährleistet sind. Die Versiegelung kann hierbei mittels der Verbindungsschicht erfolgen, während eine hohe Abriebfestigkeit sowie die dauerhafte Oberflächengüte der Beschichtung durch den Einsatz des Deckschichtelementes sichergestellt werden.

Erfindungsgemäß umfaßt die Verbindungsschicht ein Verbindungsmaterial, das unter Druckbeaufschlagung zwischen das Basisteil und das Deckschichtelement eingebracht ist. So kann beispielsweise vorgesehen sein, daß das Verbindungsmaterial mittels eines Kolben-Zylinderaggregates zwischen das Basisteil und das Deckschichtelement gepresst werden kann.

Günstig ist es, wenn das Verbindungsmaterial mittels eines Überdrukkes von etwa 0,3 bar bis ca. 3,5 bar, vorzugsweise 0,5 bar bis 2 bar, einbringbar ist. Der Einsatz eines derartigen Überdruckes stellt sicher, daß das Verbindungsmaterial im flüssigen Zustand sich gleichmäßig zwischen Basisteil und Deckschichtelement verteilt, wobei praktisch keine Gasblasen gebildet werden.

Von besonderem Vorteil ist es, wenn die Verbindungsschicht ein in flüssigem Zustand zwischen das Basisteil und das Deckschichtelement einbringbares und anschließend aushärtbares Verbindungsmaterial umfaßt. Dies ermöglicht eine rationelle Herstellung des Innenausbauteiles, wobei kurze Prozeßzeiten erzielbar sind, indem das Basisteil und das Deckschichtelement aufeinandergesetzt und anschließend zwischen Basisteil und Deckschichtelement ein flüssiges Verbindungsmaterial eingebracht wird, welches dann aushärtet. Das Verbindungsmaterial kann nicht nur der Versiegelung des Basisteiles und der Festlegung des Deckschichtelementes dienen, sondern es kann zusätzlich eine Pufferfunktion erfüllen, um die unterschiedlichen Wärmeausdehnungen von Basisteil und Deckschichtelement auszugleichen. Das Deckschichtelement wiederum vermittelt dem Innenausbauteil nicht nur eine hohe Oberflächengüte, sondern es verringert die Ausgasung giftiger Substanzen, beispielsweise Styrol, die beim Verbindungsmaterial zum. Einsatz kommen können. Das fertige Innenausbauteil zeichnet sich deshalb auch durch eine besonders geringe Ausgasung gesundheitsschädlicher Substanzen aus.

Eine besonders kostengünstige Herstellung des Innenausbauteiles kann dadurch erzielt werden, daß das Verbindungsmaterial unter Beaufschlagung mit UV-Strahlung aushärtbar ist. Hierzu kann vorgesehen sein, daß das Verbindungsmaterial UV-strahlungsempfindliche Sensibilisatoren aufweist, die derart ausgewählt werden, daß sie bei Beaufschlagung mit UV-Strahlung eine Kettenreaktion auslösen, die zu einer Aushärtung des Verbindungsmateriales führt. Der Anteil an UV-strahlungsempfindlichen Sensibilisatoren wird vorzugsweise derart gewählt, daß das Verbindungsmaterial bei Beaufschlagung mit UV-Strahlung innerhalb eines Zeitraumes von wenigen Minuten, beispielsweise weniger als 3 Minuten, zumindest soweit aushärtet, daß das Innenausbauteil handhabbar ist. Das Aufbringen einer Beschichtung auf das Basisteil kann somit innerhalb weniger Minuten durchgeführt werden.

Vorzugsweise ist das Verbindungsmaterial im ausgehärteten Zustand transparent, denn dadurch kann die ästhetische Wirkung des Innenausbauteiles zusätzlich verbessert werden.

Die Verbindungsschicht kann beispielsweise eine Kleberschicht, insbesondere unter Einsatz eines Zweikomponentenklebers, umfassen.

Bei einer besonders bevorzugten Ausführungsform ist vorgesehen, daß die Verbindungsschicht eine Lack- oder Harzschicht aufweist. Hierbei kann insbesondere ein Kunstharzmaterial zum Einsatz kommen, beispielsweise ein Polyester oder ein Kunstharz auf Polyurethan-, Acryl- oder Epoxybasis.

Die Festlegung des Deckschichtelementes auf der Sichtseite des Basisteiles erfolgt, wie erläutert, mittels der Verbindungsschicht. Das Deckschichtelement muß folglich keine Haftfunktion aufweisen.

Zur Erzielung einer ästhetisch besonders vorteilhaften Oberflächenqualität des Innenausbauteiles ist es von Vorteil, wenn das Deckschichtelement aus einem transparenten Material gefertigt ist.

Vorzugsweise ist das Deckschichtelement aus Kunststoff hergestellt. Hierbei haben sich Thermoplaste als günstig erwiesen, insbesondere Polycarbonate.

Bei einer besonders kostengünstig herstellbaren Ausführungsform des erfindungsgemäßen Innenausbauteiles ist das Deckschichtelement aus einer Folie gefertigt. Der Einsatz einer Folie ermöglicht eine einfache Handhabung. Insbesondere kann die Folie kostengünstig vorgeformt, beispielsweise tiefgezogen werden. Hierbei ist es günstig, wenn die Folie auf das zu beschichtende Basisteil aufspannbar ist.

Von Vorteil ist es, wenn die Folie durch Tiefziehen auf das Basisteil aufbringbar ist. Hierzu kann eine an sich bekannte Tiefziehanlage zum Einsatz kommen, mit deren Hilfe das Basisteil mit der Folie überzogen werden kann.

Die Dicke der vorgeformten Folie kann insbesondere ca. 50% bis ungefähr 90% der Gesamtschichtdicke der Beschichtung aufweisen, vorzugsweise eine Dicke von ungefähr 0,4 mm bis etwa 0,7 mm.

Alternativ kann vorgesehen sein, daß das Deckschichtelement als vorgefertigtes Spritzgußteil ausgebildet ist. Das Spritzgußteil kann vorzugsweise auf die Sichtseite des Basisteiles aufgesetzt und mittels der Verbindungsschicht an diesem festgelegt werden.

Von besonderem Vorteil ist es, wenn das Spritzgußteil schalenförmig ausgestaltet ist, denn dadurch wird die Montage des Innenausbauteiles vereinfacht. Eine besonders einfache Montage kann dadurch erzielt werden, daß das Spritzgußteil auf das Basisteil aufsetzbar ist.

Zur Steigerung der ästhetischen Wirkung des Innenausbauteiles kann vorgesehen sein, daß ein Dekormaterial oder verschiedene Dekormaterialien zwischen dem Deckschichtelement und dem Basisteil angeordnet sind. Hierzu können insbesondere Textilien, Späne, Naturmaterialien, wie zum Beispiel Blätter, Horn, Sand und dergleichen, Glasund/oder Karbonfasergewebe oder sonstige optisch ansprechende Stoffe zum Einsatz kommen. Die Dekormaterialien werden mittels der Verbindungsschicht am Basisteil festgelegt und anschließend vom Deckschichtelement abgedeckt. Die Verbindungsschicht kann die Dekormaterialien vollständig umgeben.

Die Verbindungsschicht kann nicht nur zur Festlegung des Deckschichtelementes zum Einsatz kommen, sondern sie kann zusätzlich der Festlegung eines das Basisteil rückseitig abstützenden Stützelementes dienen. Hierzu kann vorgesehen sein, daß die Verbindungsschicht auf der Sichtseite und auf der Rückseite des Basisteiles angeordnet ist und daß das Basisteil rückseitig vom Stützelement gehalten ist, das mittels der Verbindungsschicht am Basisteil festgelegt ist. Es kann insbesondere vorgesehen sein, daß die Verbindungsschicht das Basisteil vollständig umgibt, so daß das Basisteil allseitig versiegelt ist. Das Stützelement verleiht dem Basisteil die gewünschte Formstabilität und kann mittels der Verbindungsschicht am Basisteil festgelegt werden. Zusätzlich kann das Stützelement Halteteile umfassen, mit deren Hilfe das Innenausbauteil im Innenraum eines Kraftfahrzeuges befestigt werden kann.

Als Basisteil können insbesondere Zierteile, beispielsweise ein Textilmaterial, Mineralstoffe, Holz und insbesondere ein vorgeformtes, selbständig jedoch nicht formstabiles Laminat zum Einsatz kommen, beispielsweise unter Einsatz eines Holzfurnieres.

Von besonderem Vorteil ist es, wenn das Stützelement aus einem transparenten Material gefertigt ist, insbesondere aus einem Kunststoffmaterial.

Als günstig hat es sich erwiesen, das Stützelement als vorgefertigtes, insbesondere schalenförmig ausgestaltetes, vorzugsweise rückseitig auf das Basisteil aufsetzbares Spritzgußteil auszubilden.

Vorteilhaft ist es, wenn das Stützelement eine Aufnahme für ein Beleuchtungselement aufweist, denn dies gibt die Möglichkeit, das Innenausbauteil optisch ansprechend zu hinterleuchten.

Wie eingangs erwähnt, betrifft die Erfindung auch ein Verfahren zur Herstellung eines Innenausbauteiles mit verbesserter Abriebfestigkeit.

Diese Aufgabe wird durch ein Verfahren mit den Merkmalen des Anspruches 23 gelöst.

Das erfindungsgemäße Verfahren zeichnet sich unter anderem dadurch aus, daß ein Deckschichtelement vorgeformt und mit dem Basisteil verspannt wird, um zwischen Deckschichtelement und Basisteil das Verbindungsmaterial im flüssigen Zustand einzubringen und auszuhärten.

Von Vorteil ist es, wenn man das Deckschichtelement aus einem Kunststoffmaterial herstellt, beispielsweise in Form einer Kunststoffolie. Dies gibt die Möglichkeit, das Deckschichtelement vorzugsweise durch ein Tiefziehverfahren vorzuformen. Hierbei ist es besonders vorteilhaft, wenn man das Deckschichtelement durch Tiefziehen auf das Basisteil aufbringt und anschließend mit diesem verspannt. Dies ermöglicht eine besonders kostengünstige Herstellung des Innenausbauteiles, denn die Formung des Deckschichtelementes kann gleichzeitig mit dessen Aufbringen auf das Basisteil erfolgen.

Alternativ kann vorgesehen sein, daß man das Deckschichtelement durch ein Spritzgießverfahren vorformt, beispielsweise in Form einer Halbschale, die mit dem Basisteil zusammengefügt werden kann.

Bei einer besonders bevorzugten Ausführungsform des erfindungsgemäßen Verfahrens ist vorgesehen, daß man das vorgeformte Deckschichtelement und das Basisteil in einer Aufnahme einer Form positioniert und mittels einer Spannvorrichtung mit der Form verspannt. Anschließend kann dann zwischen die Rückseite des Deckschichtelementes und die Sichtseite des Basisteiles das flüssige Verbindungsmaterial eingepreßt werden. Die Form kann auf kostengünstige Weise an die dreidimensionale Oberflächengestaltung der Sichtseite des Deckschichtelementes angepaßt werden, so daß das Deckschichtelement beim Verspannen mit dem Basisteil von der Form flächig abgestützt werden kann.

Von besonderem Vorteil ist es, wenn eine UV-strahlungsdurchlässige Form verwendet wird, beispielsweise eine Glas- oder Silikonform, die bevorzugt eine wannenförmig ausgebildete Aufnahme aufweist.

Als Verbindungsmaterial kommt vorzugsweise ein Kunstharzlack zum Einsatz, insbesondere ein mittels UV-Strahlung aushärtbarer Kunstharzlack. Dies ermöglicht es, das Verbindungsmaterial innerhalb kurzer Zeit, beispielsweise innerhalb von weniger als etwa 3 Minuten, auszuhärten, während das Deckschichtelement und das Basisteil mittels der Spannvorrichtung mit der Form verspannt sind.

Gemäß einer vorteilhaften Weiterbildung des Verfahrens ist vorgesehen, daß man zwischen Deckschichtelement und Basisteil zumindest ein Dekormaterial, beispielsweise Blätter, Horn, Sand, Holzschnipsel oder dergleichen, anordnet. Hierbei kann vorgesehen sein, daß zunächst das vorgeformte Deckschichtelement in der Aufnahme der Form positioniert wird, anschließend das Dekormaterial auf der Rückseite des Deckschichtelementes angeordnet wird, in einem weiteren Verfahrensschritt das Basisteil auf das Dekormaterial aufgesetzt und dann mittels der Spannvorrichtung mit dem Deckschichtelement verspannt wird. In einem anschließenden Verfahrensschritt kann dann zwischen Deckschichtelement und Basisteil das Verbindungsmaterial in flüssiger Form eingepreßt und - vorzugsweise mittels UV-Strahlung - ausgehärtet werden.

Die nachfolgende Beschreibung zweier bevorzugter Ausführungsformen der Erfindung dient im Zusammenhang mit der Zeichnung der näheren Erläuterung. Es zeigen:
- Figur 1:: ein auf eine Tiefziehform einer Tiefziehanlage aufgespanntes Basisteil;
- Figur 2:: das Basisteil gemäß Figur 1 mit aufgezogenem Deckschichtelement;
- Figur 3:: das Basisteil mit aufgezogenem Deckschichtelement gemäß Figur 2 beim Einbringen eines Verbindungsmaterials zwischen Basisteil und Deckschichtelement;
- Figur 4:: das Basisteil mit aufgezogenem Deckschichtelement gemäß Figur 2 beim Aushärten des Verbindungsmaterials;
- Figur 5:: ein fertiges Innenausbauteil gemäß einer ersten Ausführungsform der Erfindung;
- Figur 6:: ein Innenausbauteil gemäß einer zweiten Ausführungsform der Erfindung beim Aushärten eines Verbindungselementes und
- Figur 7:: das fertige Innenausbauteil gemäß Figur 6.

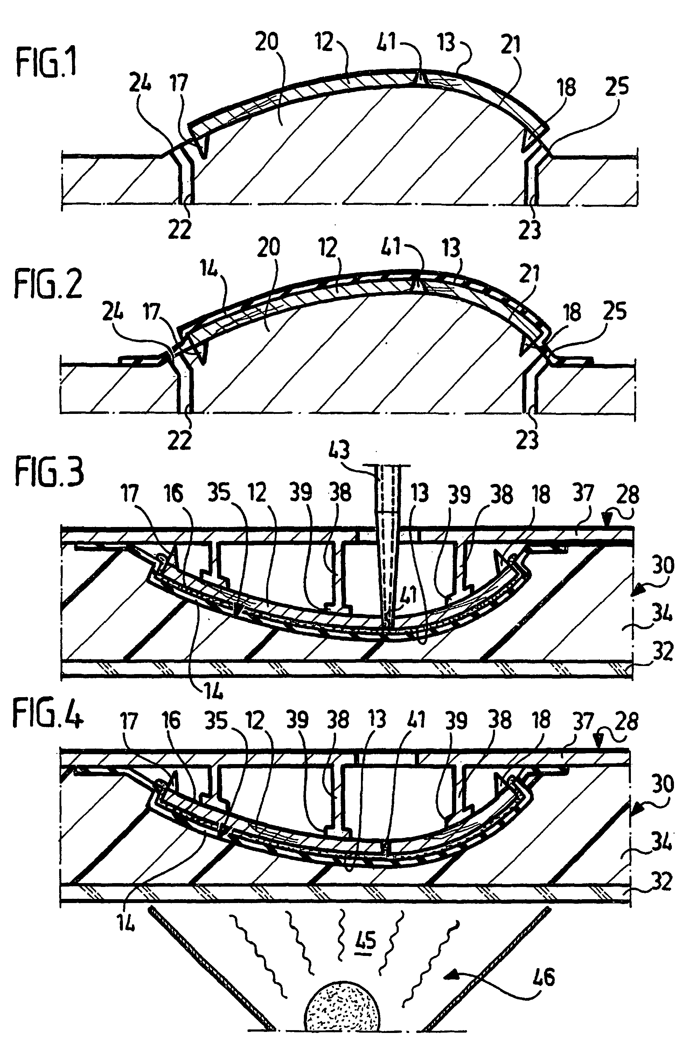

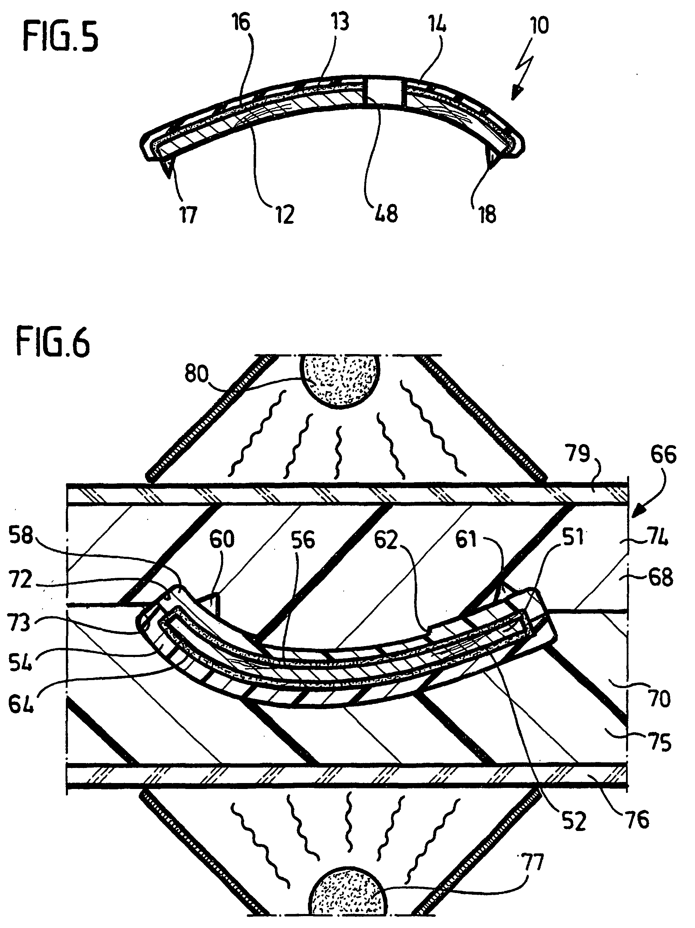

In den Figuren 1 bis 4 sind in schematischer Darstellung vier Verfahrensschritte zur Herstellung eines in Figur 5 schematisch dargestellten Innenausbauteiles gemäß einer ersten Ausführungsform der Erfindung dargestellt.

Das Innenausbauteil ist in Figur 5 mit dem Bezugszeichen 10 belegt und umfaßt ein Basisteil 12, das auf seiner Sichtseite 13 von einem Deckschichtelement 14 in Form einer etwa 0,4 mm bis etwa 0,7 mm dicken Polycarbonat (PC)-Folie beschichtet ist, wobei zwischen der PC-Folie 14 und der Sichtseite 13 des Basisteiles 12 eine Verbindungsschicht in Form einer transparenten Lackschicht 16 angeordnet ist. Rückseitig trägt das Basisteil 12 Halteteile in Form von Rastelementen 17, 18, mit deren Hilfe das Innenausbauteil 10 im Innenraum eines Kraftfahrzeuges befestigt werden kann. Das Innenausbauteil 10 weist eine Aussparung 48 auf und kann dadurch beispielsweise auf ein Schaltelement des Kraftfahrzeuges aufgesetzt werden.

Das Basisteil 12 bildet ein Zierteil und ist im dargestellten Ausführungsbeispiel als Holzfurnierteil ausgebildet. Es kann jedoch auch vorgesehen sein, das Basisteil beispielsweise als Metallteil, insbesondere als Aluminiumteil, vorzugsweise als bedrucktes Aluminiumteil, auszubilden. Außerdem kann als Basisteil beispielsweise ein Lederteil oder ein auf seiner Rückseite stabilisiertes Textilmaterial, beispielsweise ein Karbongewebe, zum Einsatz kommen. Es ist auch möglich, mehrere Materialien zu einem Basisteil zu kombinieren. Außerdem kann vorgesehen sein, das Basisteil als das Innenausbauteil rückseitig abstützendes Rückenteil auszubilden, dem allenfalls eine untergeordnete Zierfunktion zukommt, das jedoch dem Deckschichtelement zugewandt ein ausschmückendes Dekormaterial aufnimmt, wie dies weiter unten erläutert ist.

Die PC-Folie 14 ist ebenso wie die Lackschicht 16 transparent ausgebildet und zeichnet sich durch eine besonders hohe Abriebfestigkeit aus. Die Lackschicht 16 ist aus Kunstharz gefertigt, beispielsweise auf Basis eines Polyesters, Polyurethans oder auf Acryl- oder Epoxybasis. Die Lackschicht 16 bewirkt eine Versiegelung der Sichtseite 13 des Basisteiles 12 und dient gleichzeitig als Pufferschicht, mit deren Hilfe die unterschiedlichen Wärmeausdehnungen von Basisteil 12 und PC-Folie 14 ausgeglichen werden können.

Die Herstellung des Innenausbauteiles 10 wird im folgenden unter Bezugnahme auf die Figuren 1 bis 4 näher erläutert. In einem ersten Verfahrensschritt wird das vorgeformte und rückseitig mit den Rastelementen 17 und 18 versehene Basisteil 12 auf eine an sich bekannte und deshalb in der Zeichnung nur schematisch dargestellte Tiefziehform 20 einer Tiefziehanlage aufgespannt. Letztere weist eine Auflagefläche 21 auf, die an die Form des Basisteiles 12 angepaßt ist, sowie im Abstand zum Basisteil 12 in die Auflagefläche 21 einmündende Saugkanäle 22, 23, die mit einer in der Zeichnung nicht dargestellten Saugquelle, beispielsweise einer Pumpe, in Strömungsverbindung stehen und mit einem Unterdruck beaufschlagt werden können.

In einem in Figur 2 schematisch dargestellten zweiten Verfahrensschritt wird auf die Sichtseite 13 des Basisteiles 12 die PC-Folie 14 aufgelegt. Die Folie 14 ist hierbei größer gewählt als die Sichtseite 13 des Basisteiles 12, so daß sie die Mündungsbereiche 24 bzw. 25 der Saugkanäle 22 und 23 überdeckt. Anschließend werden die Saugkanäle 22 und 23 mit Unterdruck beaufschlagt, so daß die PC-Folie 14 sichtseitig über das Basisteil 12 gezogen wird. Die PC-Folie 14 paßt sich hierbei vollständig der Form der Sichtseite 13 des Basisteiles 12 an.

In einem weiteren, in Figur 3 illustrierten Verfahrensschritt wird das Basisteil 12 mit aufgezogener PC-Folie 14 der Tiefziehform 20 entnommen und mittels einer Spannvorrichtung 28 mit einem Formteil 30 verspannt. Das Formteil 30 umfaßt eine Tragplatte 32 aus einem UV-strahlungsdurchlässigen Kunststoff- oder Glasmaterial, vorzugsweise Quarzglas, das nur eine geringe Absorption für Ultraviolett (UV)-Strahlung aufweist. Die Tragplatte 32 trägt eine Form 34, die auf ihrer der Tragplatte 32 abgewandten Oberseite eine an die Formgestaltung der mit der PC-Folie 14 überzogenen Sichtseite 13 des Basisteiles 12 angepaßte, wannenförmige Aufnahme 35 aufweist. Die Form 34 ist ebenfalls aus einem UV-strahlungsdurchfässigen Material gefertigt, vorzugsweise aus einem Silikon-Material.

Die Spannvorrichtung 28 umfaßt einen Spannhebel 37, von dem in Richtung auf die Tragplatte 32 mehrere Spannzapfen 38 abstehen, die an ihrem freien Ende jeweils einen Spannteller 39 tragen, der an der Rückseite des Basisteiles 12 anliegt, so daß dieses innerhalb der wannenförmigen Aufnahme 35 unverschieblich gehalten ist.

Das Basisteil 12 weist eine durchgängige Einfüllöffnung 41 auf, die sichtseitig von der PC-Folie 14 überdeckt wird. Über die Einfüllöffnung 41 wird mittels einer Einfülldüse 43 ein flüssiger Kunstharzlack in den Bereich zwischen der Sichtseite 13 des Basisteiles 12 und der PC-Folie 14 eingespritzt. Der Kunstharzlack verteilt sich über die gesamte Sichtseite 13 des Basisteiles 12 und kann anschließend - wie in Figur 4 dargestellt - mittels UV-Strahlung 45, die von einer unterhalb der Tragplatte 32 angeordneten UV-Strahlungsquelle 46 bereitgestellt wird, ausgehärtet werden.

Nach der Aushärtung des Lackes kann das sichtseitig mit der PC-Folie 14 überzogene Basisteil 12 dem Formteil 30 entnommen werden. Eine weitere Oberflächenbearbeitung des Innenausbauteiles 10 zur Verbesserung seiner Oberflächengüte ist nicht erforderlich. Beim Ausführungsbeispiel gemäß Figur 5 ist lediglich vorgesehen, nach der Entnahme aus dem Formteil 30 in das Innenausbauteil 10 die Aussparung 48 beispielsweise durch Fräsen einzubringen. Die Aussparung 48 ist hierbei in einem Bereich angeordnet, in dem ursprünglich die Einfüllöffnung 41 des Basisteiles 12 positioniert war. Ist beim fertigen Innenausbauteil 10 keine derartige Aussparung 48 vorgesehen, so kann das Einbringen des Lackes in den Zwischenraum zwischen der Sichtseite 13 des Basisteiles 12 und der PC-Folie 14 mittels der Einfülldüse 43 in einem Randbereich des Basisteiles 12, beispielsweise einem Rastelement 17 oder 18 unmittelbar benachbart, erfolgen.

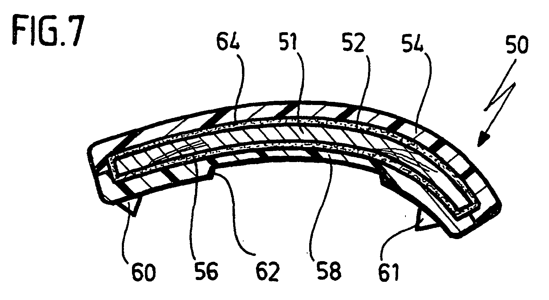

Eine zweite Ausführungsform eines erfindungsgemäßen Innenausbauteiles ist in Figur 7 schematisch dargestellt. Es ist insgesamt mit dem Bezugszeichen 50 belegt und umfaßt ein Basisteil 51, das im dargestellten Ausführungsbeispiel ebenfalls unter Verwendung von Holz gefertigt ist. Während im voranstehend beschriebenen Ausführungsbeispiel das Basisteil von einem Deckschichtelement in Form einer Kunststofffolie 14 belegt ist, ist das Basisteil 51 des Innenausbauteiles 50 auf seiner Sichtseite 52 von einem Deckschichtelement in Form einer als vorgefertigtes Spritzgußteil ausgebildeten vorderen Kunststoffschale 54 überdeckt. Auf der Rückseite 56 des Basisteiles 51 ist eine hintere Kunststoffschale 58 angeordnet, die ebenfalls als vorgefertigtes Spritzgußteil ausgestaltet ist und ein Stützelement für das Basisteil 51 bildet und auf ihrer der Rückseite 56 abgewandten Außenseite angeformte Rastelemente 60, 61 sowie eine Aufnahme 62 aufweist, die bei Einbau des Innenausbauteiles 50 in den Innenraum eines Kraftfahrzeuges ein Beleuchtungselement aufnimmt.

Die vordere Kunststoffschale 54 und die hintere Kunststoffschale 58 bilden ein das Basisteil 51 vollständig umgebendes Gehäuse und sind jeweils aus einem transparenten Kunststoff im Spritzgießverfahren hergestellt. Zwischen den Kunststoffschalen 54 und 58 einerseits und dem Basisteil 51 andererseits ist eine das Basisteil 51 vollständig umgebende Verbindungsschicht in Form einer Lackschicht 64 angeordnet, die ebenfalls transparent ausgestaltet ist und die vordere Kunststoffschale 54 sowie die hintere Kunststoffschale 58 am Basisteil 51 festlegt.

Da die Kunststoffschalen 54 und 58 und die Lackschicht 64 transparent ausgebildet sind, kann das Innenausbauteil 50 mittels des in der Aufnahme 63 zu positionierenden Beleuchtungselementes auf einfache Weise hinterleuchtet werden, so daß sich das Innenausbauteil 50 durch eine ästhetisch besonders ansprechende Ausgestaltung auszeichnet.

Die Herstellung des Innenausbauteiles 50 wird insbesondere aus Figur 6 deutlich. Entsprechend den Ausführungen zu den Figuren 3 und 4 wird bei der Herstellung des Innenausbauteiles 50 ein Formteil 66 bereitgestellt. Dieses umfaßt eine Oberform 68 und eine Unterform 70, die einander zugewandt jeweils eine wannenförmige Aufnahme 72 bzw. 73 aufweisen. Die Oberform 68 und die Unterform 70 umfassen jeweils eine aus einem UV-strahlungsdurchlässigen Material, insbesondere einem Silikonmaterial, gefertigte Form 74 bzw. 75, in die die wannenförmigen Aufnahmen 72 bzw. 73 eingebracht sind. Die Unterform 70 umfaßt außerdem eine aus einem UV-strahlungsdurchlässigen Material, insbesondere aus Quarzglas, gefertigte Tragplatte 76, die die Form 75 abstützt. Unterhalb der Tragplatte 76 ist eine untere UV-Strahlungsquelle 77 positioniert.

Die Oberform 68 weist auf ihrer der wannenförmigen Aufnahme 72 abgewandten Oberseite eine aus einem UV-strahlungsdurchlässigen Material, vorzugsweise aus Quarzglas, gefertigte Deckplatte 79 auf. Oberhalb der Deckplatte 79 ist eine obere UV-Strahlungsquelle 80 angeordnet.

In einem ersten Verfahrensschritt wird bei noch getrennten Ober- und Unterformen 68, 70 in die wannenförmige Aufnahme 73 der Unterform 70 die im Spritzgießverfahren vorgefertigte vordere Kunststoffschale 54 des Innenausbauteiles 50 eingebracht. Anschließend wird in der Kunststoffschale 54 das Basisteil 51 positioniert. In einem weiteren Verfahrensschritt wird dann rückseitig auf das Basisteil 51 die hintere Kunststoffschale 58 aufgesetzt, und anschließend wird das Formteil 66 geschlossen. Nunmehr wird über einen in der Zeichnung nicht dargestellten Einfüllkanal ein flüssiger Kunstharzlack in den Zwischenraum zwischen das Basisteil 51 einerseits und die vorderen und hinteren Kunststoffschalen 54 bzw. 58 andererseits eingedrückt. Der noch flüssige Kunstharzlack umgibt hierbei das Basisteil 51 vollständig und wird anschließend mittels der unteren Strahlungsquelle 77 und der oberen Strahlungsquelle 80 durch beidseitige Beaufschlagung mit UV-Strahlung innerhalb des Formteiles 66 ausgehärtet. Die ausgehärtete Lackschicht 64 bildet eine die Kunststoffschalen 54 und 58 zuverlässig am Basisteil 51 festlegende Verbindungsschicht und stellt außerdem ein Puffer dar, mit dessen Hilfe die unterschiedlichen Wärmeausdehnungen der Kunststoffschalen 54 und 58 einerseits und des Basisteiles 51 andererseits ausgeglichen werden können.

Die Kunststoffschalen 54 und 58 bilden eine transparente Abdeckung für das Basisteil 51. Dies gibt die Möglichkeit, zusätzliche Dekormaterialien zwischen dem Basisteil 51 und den Kunststoffschalen 54 und 58 anzuordnen. So kann beispielsweise vorgesehen sein, daß Naturmaterialien wie zum Beispiel Blätter, Horn, Sand etc. auf der dem Basisteil 51 zugewandten Rückseite der vorderen Kunststoffschale 54 positioniert werden, bevor das Basisteil 51 auf die vordere Kunststoffschale 54 aufgesetzt wird. Anschließend kann wie voranstehend erläutert der Lack eingepreßt werden, der das Dekormaterial vollständig umgibt und dann aushärtet. Dadurch kann die ästhetische Wirkung des Innenausbauteiles 50 zusätzlich verbessert werden.

## Patentansprüche

1. Innenausbauteil (10, 50) zur Auskleidung eines Kraftfahrzeuginnenraumes mit einem Basisteil (12, 51) und einer zumindest die Sichtseite des Basisteiles (12, 51) mindestens bereichsweise überdeckenden Beschichtung, wobei die Beschichtung ein Deckschichtelement (14, 54) umfaßt, das mittels einer Verbindungsschicht (16, 64) am Basisteil (12, 51) festgelegt ist, **dadurch gekennzeichnet, daß** die Verbindungsschicht (16, 64) ein Verbindungsmaterial umfaßt, das unter Druckbeaufschlagung zwischen das Basisteil (12, 51) und das Deckschichtelement (14, 54) eingebracht ist.

2. Innenausbauteil nach Anspruch 1, **dadurch gekennzeichnet, daß** die Verbindungsschicht (16, 64) ein in flüssigem Zustand zwischen das Basisteil (12, 51) und das Deckschichtelement (14, 54) einbringbares und anschließend aushärtbares Verbindungsmaterial umfaßt.

3. Innenausbauteil nach Anspruch 1 oder 2, **dadurch gekennzeichnet, daß** das Verbindungsmaterial unter Beaufschlagung mit UV-Strahlung (45) aushärtbar ist.

4. Innenausbauteil nach einem der voranstehenden Ansprüche, **dadurch gekennzeichnet, daß** das Verbindungsmaterial im ausgehärteten Zustand transparent ist.

5. Innenausbauteil nach einem der voranstehenden Ansprüche, **dadurch gekennzeichnet, daß** die Verbindungsschicht eine Lackoder Harzschicht (16, 64) aufweist.

6. Innenausbauteil nach einem der voranstehenden Ansprüche, **dadurch gekennzeichnet, daß** die Verbindungsschicht (16, 64) ein Kunstharzmaterial umfaßt.

7. Innenausbauteil nach einem der voranstehenden Ansprüche, **dadurch gekennzeichnet, daß** das Deckschichtelement (14, 54) aus einem transparenten Material gefertigt ist.

8. Innenausbauteil nach einem der voranstehenden Ansprüche, **dadurch gekennzeichnet, daß** das Deckschichtelement (14, 54) aus Kunststoff gefertigt ist.

9. Innenausbauteil nach einem der voranstehenden Ansprüche, **dadurch gekennzeichnet, daß** das Deckschichtelement aus einer Folie (14) gefertigt ist.

10. Innenausbauteil nach Anspruch 9, **dadurch gekennzeichnet, daß** die Folie (14) vorgeformt ist.

11. Innenausbauteil nach Anspruch 9 oder 10, **dadurch gekennzeichnet, daß** die Folie (14) durch Tiefziehen vorgeformt ist.

12. Innenausbauteil nach Anspruch 9, 10 oder 11, **dadurch gekennzeichnet, daß** die Folie (14) durch über das Basisteil (12) erfolgendes Tiefziehen auf das Basisteil (12) aufbringbar ist.

13. Innenausbauteil nach einem der Ansprüche 1 bis 8, **dadurch gekennzeichnet, daß** das Deckschichtelement als vorgefertigtes Spritzgußteil (54) ausgebildet ist.

14. Innenausbauteil nach Anspruch 13, **dadurch gekennzeichnet, daß** das Spritzgußteil (54) schalenförmig ausgestaltet ist.

15. Innenausbauteil nach Anspruch 13 oder 14, **dadurch gekennzeichnet, daß** das Spritzgußteil (54) auf das Basisteil (51) aufsetzbar ist.

16. Innenausbauteil nach einem der voranstehenden Ansprüche, **dadurch gekennzeichnet, daß** das Basisteil als Zierteil (12) ausgebildet ist.

17. Innenausbauteil nach Anspruch 16, **dadurch gekennzeichnet, daß** das Zierteil (12) ein Holzformteil umfaßt.

18. Innenausbauteil nach einem der voranstehenden Ansprüche, **dadurch gekennzeichnet, daß** zwischen dem Deckschichtelement (14, 54) und dem Basisteil (12, 51) zumindest ein Dekormaterial angeordnet ist.

19. Innenausbauteil nach einem der voranstehenden Ansprüche, **dadurch gekennzeichnet, daß** die Verbindungsschicht (64) auf der Sichtseite (52) und auf der Rückseite (56) des Basisteiles (51) angeordnet ist, und daß das Basisteil (51) rückseitig von einem Stützelement (58) gehalten ist, das mittels der Verbindungsschicht (64) am Basisteil (51) festgelegt ist.

20. Innenausbauteil nach Anspruch 19, **dadurch gekennzeichnet, daß** das Stützelement (58) aus einem transparenten Material gefertigt ist.

21. Innenausbauteil nach Anspruch 19 oder 20, **dadurch gekennzeichnet, daß** das Stützelement als vorgefertigtes Spritzgußteil (58) gefertigt ist.

22. Innenausbauteil nach Anspruch 19, 20 oder 21, **dadurch gekennzeichnet, daß** das Stützelement (58) eine Aufnahme (62) für ein Beleuchtungselement aufweist.

23. Verfahren zur Herstellung eines Innenausbauteiles nach einem der voranstehenden Ansprüche, **dadurch gekennzeichnet, daß** man ein vorgeformtes Deckschichtelement mit einem Basisteil verspannt, und daß man zwischen das Deckschichtelement und das Basisteil ein flüssiges Verbindungsmaterial einpreßt und anschließend aushärtet.

24. Verfahren nach Anspruch 23, **dadurch gekennzeichnet, daß** man das Deckschichtelement aus einem Kunststoffmaterial herstellt.

25. Verfahren nach Anspruch 24, **dadurch gekennzeichnet, daß** man das Deckschichtelement aus einer Kunststoffolie herstellt.

26. Verfahren nach Anspruch 23, 24 oder 25, **dadurch gekennzeichnet, daß** man das Deckschichtelement durch Tiefziehen vorformt.

27. Verfahren nach Anspruch 26, **dadurch gekennzeichnet, daß** man das Deckschichtelement durch Tiefziehen auf das Basisteil aufbringt und anschließend mit diesem verspannt.

28. Verfahren nach Anspruch 23, 24 oder 25, **dadurch gekennzeichnet, daß** man das Deckschichtelement durch Spritzgießen vorformt.

29. Verfahren nach einem der Ansprüche 23 bis 28, **dadurch gekennzeichnet, daß** man das vorgeformte Deckschichtelement und das Basisteil in einer Aufnahme einer Form positioniert und mittels einer Spannvorrichtung mit der Form verspannt.

30. Verfahren nach Anspruch 29, **dadurch gekennzeichnet, daß** man eine UV-strahlungsdurchlässige Form verwendet.

31. Verfahren nach einem der Ansprüche 23 bis 30, **dadurch gekennzeichnet, daß** man als Verbindungsmaterial einen Kunstharzlack verwendet.

32. Verfahren nach einem der Ansprüche 23 bis 31, **dadurch gekennzeichnet, daß** man als Verbindungsmaterial einen mittels UV-Strahlung aushärtbaren Kunstharzlack verwendet.

33. Verfahren nach einem der Ansprüche 29 bis 32, **dadurch gekennzeichnet, daß** man zwischen dem Deckschichtelement und dem Basisteil zumindest ein Dekormaterial anordnet.

## Claims

1. An interior fitting (10, 50) for lining a motor vehicle interior, having a base part (12, 51) and a coating which covers at least the visible side of the base part (12, 51), at least in some regions, the coating comprising an upper coating element (14, 54) that is fixed to the base part (12, 51) by means of a connecting layer (16, 64),
**characterised in that** the connecting layer (16, 64) comprises a connecting material which is inserted by the application of pressure between the base part (12, 51) and the upper coating element (14, 54).

2. An interior fitting according to Claim 1,
**characterised in that** the connecting layer (16, 64) comprises a connection material which can be inserted in the liquid state between the base part (12, 51) and the upper coating element (14, 54) and can then be hardened.

3. An interior fitting according to Claim 1 or 2,
**characterised in that** the connecting material can be hardened by being exposed to UV radiation (45).

4. An interior fitting according to one of the preceding Claims,
**characterised in that** the connecting material is transparent in the hardened state.

5. An interior fitting according to one of the preceding Claims,
**characterised in that** the connecting layer comprises a lacquer or resin layer (16, 64).

6. An interior fitting according to one of the preceding Claims,
**characterised in that** the connecting layer (16, 63) comprises an artificial resin material.

7. An interior fitting according to one of the preceding Claims,
**characterised in that** the upper coating element (14, 54) is produced from a transparent material.

8. An interior fitting according to one of the preceding Claims,
**characterised in that** the upper coating element (14, 54) is produced from plastic.

9. An interior fitting according to one of the preceding Claims,
**characterised in that** the upper coating element is made from a foil (14).

10. An interior fitting according to Claim 9,
**characterised in that** the foil is preformed.

11. An interior fitting according to Claim 9 or 10,
**characterised in that** the foil (14) is preformed by deep-drawing.

12. An interior fitting according to Claim 9, 10 or 11,
**characterised in that** the foil (14) can be applied to the base part (12) by deep-drawing that takes place over the base part (12).

13. An interior fitting according to one of Claims 1 to 8,
**characterised in that** the upper coating element is constructed as a prefabricated injection-moulded part (54).

14. An interior fitting according to Claim 13,
**characterised in that** the injection-moulded part (54) has a shell-shaped configuration.

15. An interior fitting according to Claim 13 or 14,
**characterised in that** the injection-moulded part (54) can be placed onto the base part (51).

16. An interior fitting according to one of the preceding Claims,
**characterised in that** the base part is constructed as a decorative part (12).

17. An interior fitting according to Claim 16,
**characterised in that** the decorative part (12) comprises a wood preform.

18. An interior fitting according to one of the preceding Claims,
**characterised in that** at least one decorative material is disposed between the upper coating element (14, 54) and the base part (12, 51).

19. An interior fitting according to one of the preceding Claims,
**characterised in that** the connecting layer (64) is disposed on the visible side (52) and on the rear side (56) of the base part (51), and **in that** the base part (51) is retained at the rear side by a support element (58) which is fixed to the base part (51) by means of the connecting layer (64).

20. An interior fitting according to Claim 19,
**characterised in that** the support element (58) is produced from a transparent material.

21. An interior fitting according to Claim 19 or 20,
**characterised in that** the support element is produced as a prefabricated injection-moulded part (58).

22. An interior fitting according to Claim 19, 20 or 21,
**characterised in that** the support element (58) comprises a housing (62) for a lighting element.

23. A method for the manufacture of an interior fitting according to one of the preceding Claims,
**characterised in that** a preformed upper coating element is braced with a base part,
and **in that** a liquid connecting material is pressed between the upper coating element and the base part and then is hardened.

24. A method according to Claim 23,
**characterised in that** the upper coating element is manufactured from a synthetic material.

25. A method according to Claim 24,
**characterised in that** the upper coating element is manufactured from a plastic foil.

26. A method according to Claim 23, 24 or 25,
**characterised in that** the upper coating element is preformed by deep drawing.

27. A method according to Claim 26,
**characterised in that** the upper coating element is applied to the base part by deep-drawing and is then braced with it.

28. A method according to Claim 23, 24 or 25,
**characterised in that** the upper coating element is preformed by injection moulding.

29. A method according to one of Claims 23 to 28,
**characterised in that** the preformed upper coating element and the base part are positioned in a seat of a mould and are braced with the mould by means of a chucking device.

30. A method according to Claim 29,
**characterised in that** a mould which can be penetrated by UV radiation is used.

31. A method according to one of Claims 23 to 30,
**characterised in that** an artificial resin lacquer is used as the connecting material.

32. A method according to one of Claims 23 to 31,
**characterised in that** an artificial resin lacquer which can be hardened by means of UV radiation is used as the connecting material.

33. A method according to one of Claims 29 to 32,
**characterised in that** at least one decorative material is disposed between the upper coating element and the base part.

## Revendications

1. Pièce de finition intérieure (10, 50) pour garnir un intérieur d'automobile avec une pièce de base (12, 51) et un revêtement recouvrant du moins pour ce qui est de la région au moins le côté visible de la pièce de base (12, 51), le revêtement comprenant un élément de couche extérieure (14, 54) qui est fixé sur la pièce de base (12, 51) au moyen d'une couche de liaison, **caractérisée en ce que** la couche de liaison (16, 64) comprend une matière de liaison qui est placée en exerçant une pression entre la pièce de base (12, 51) et l'élément de couche extérieure (14, 54).

2. Pièce de finition intérieure selon la revendication 1, **caractérisée en ce que** la couche de liaison (16, 64) comprend une matière de liaison qui peut être appliquée à l'état liquide entre la pièce de base (12, 51) et l'élément de couche extérieure (14, 54) et qui peut ensuite être durcie.

3. Pièce de finition intérieure selon la revendication 1 ou 2, **caractérisée en ce que** la matière de liaison peut être durcie sous l'action d'un rayonnement UV (45).

4. Pièce de finition intérieure selon une des revendications précédentes, **caractérisée en ce que** la matière de liaison est transparente à l'état durci.

5. Pièce de finition intérieure selon une des revendications précédentes, **caractérisée en ce que** la couche de liaison présente une couche de laque ou de résine (16, 64).

6. Pièce de finition intérieure selon une des revendications précédentes, **caractérisée en ce que** la couche de liaison (16, 64) comprend une matière à base de résine synthétique.

7. Pièce de finition intérieure selon une des revendications précédentes, **caractérisée en ce que** l'élément de couche extérieure (14, 54) est fabriqué dans une matière transparente.

8. Pièce de finition intérieure selon une des revendications précédentes, **caractérisée en ce que** l'élément de couche extérieure (14, 54) est fabriqué en matière synthétique.

9. Pièce de finition intérieure selon une des revendications précédentes, **caractérisée en ce que** l'élément de couche extérieure (14) est fabriqué dans une feuille (14).

10. Pièce de finition intérieure selon la revendication 9, **caractérisée en ce que** la feuille (14) est préformée.

11. Pièce de finition intérieure selon la revendication 9 ou 10, **caractérisée en ce que** la feuille (14) est préformée par emboutissage profond.

12. Pièce de finition intérieure selon la revendication 9, 10 ou 11, **caractérisée en ce que** la feuille (14) peut être appliquée sur la pièce de base (12) par emboutissage profond effectué sur la pièce de base (12).

13. Pièce de finition intérieure selon une des revendications 1 à 8, **caractérisée en ce que** l'élément de couche extérieure est conformé comme une pièce moulée par injection (54) préfabriquée.

14. Pièce de finition intérieure selon la revendication 13, **caractérisée en ce que** la pièce moulée par injection (54) est configurée en forme de coquille.

15. Pièce de finition intérieure selon la revendication 13 ou 14, **caractérisée en ce que** la pièce moulée par injection (54) peut être placée sur la pièce de base (51).

16. Pièce de finition intérieure selon une des revendications précédentes, **caractérisée en ce que** la pièce de base est configurée comme une pièce d'ornementation (12).

17. Pièce de finition intérieure selon la revendication 16, **caractérisée en ce que** la pièce d'ornementation (12) comprend une pièce préformée en bois.

18. Pièce de finition intérieure selon une des revendications précédentes, **caractérisée en ce qu'**au moins une matière décorative est disposée entre l'élément de couche extérieure (14, 54) et la pièce de base (12, 51 ).

19. Pièce de finition intérieure selon une des revendications précédentes, **caractérisée en ce que** la couche de liaison (64) est disposé sur le côté visible (52) et sur le côté arrière de la pièce de base (51) et **en ce que** la pièce de base (51) est retenue du côté arrière par un élément de soutien (58) qui est fixé à la pièce de base (51) au moyen de la couche de liaison (64).

20. Pièce de finition intérieure selon la revendication 19, **caractérisée en ce que** l'élément de soutien (58) est fabriqué dans une matière transparente.

21. Pièce de finition intérieure selon la revendication 19 ou 20, **caractérisée en ce que** l'élément de soutien est fabriqué comme une pièce moulée par injection (58) préfabriquée.

22. Pièce de finition intérieure selon la revendication 19, 20 ou 21, **caractérisée en ce que** l'élément de soutien (58) présente un évidement (62) pour un élément d'éclairage.

23. Procédé de production d'une pièce de finition intérieure selon une des revendications précédentes, **caractérisé en ce qu'**on met sous tension un élément de couche extérieure préformé avec une pièce de base et **en ce qu'**on presse la matière de liaison liquide entre l'élément de couche extérieure et la pièce de base et qu'on la durcit ensuite.

24. Procédé selon la revendication 23, **caractérisé en ce qu'**on fabrique l'élément de couche extérieure dans une matière synthétique.

25. Procédé selon la revendication 24, **caractérisé en ce qu'**on fabrique l'élément de couche extérieure dans une feuille de matière synthétique.

26. Procédé selon la revendication 23, 24 ou 25, **caractérisé en ce qu'**on déforme l'élément de couche extérieure par emboutissage profond.

27. Procédé selon la revendication 26, **caractérisé en ce qu'**on applique l'élément de couche extérieure par emboutissage profond sur la pièce de base et qu'on le met ensuite sous tension avec celle-ci.

28. Procédé selon la revendication 23, 24 ou 25, **caractérisé en ce qu'**on préforme l'élément de couche extérieure par moulage par injection.

29. Procédé selon une des revendications 23 à 28, **caractérisé en ce qu'**on positionne l'élément de couche extérieure préformé et la pièce de base dans un évidement dans une forme et qu'on met sous tension avec la forme au moyen d'un dispositif de mise sous tension.

30. Procédé selon la revendication 29, **caractérisé en ce qu'**on utilise une forme laissant passer les rayons UV.

31. Procédé selon une des revendications 23 à 30, **caractérisé en ce qu'**on utilise comme matière de liaison une laque à base de résine synthétique.

32. Procédé selon une des revendications 23 à 31, **caractérisé en ce qu'**on utilise comme matière de liaison une laque à base de résine synthétique pouvant être durcie au moyen de rayons UV.

33. Procédé selon une des revendications 29 à 32, **caractérisé en ce qu'**on dispose au moins une matière décorative entre l'élément de couche extérieure et la pièce de base.
